# EUROPÄISCHE PATENTSCHRIFT

(11) **EP 3 066 928 B1**
(45) Veröffentlichungstag und Bekanntmachung des Hinweises auf die Patenterteilung: **26.08.2020**
(21) Anmeldenummer: 16157593.1
(22) Anmeldetag: 26.02.2016
(51) Int. Cl.: A21C 3/00, A21C 9/00, B65G 15/40

(54) **BÄCKEREIMASCHINENANLAGE ZUM FÖRDERN VON TEIG**
BAKERY MACHINE INSTALLATION FOR CONVEYING DOUGH
INSTALLATION DES MACHINES DE BOULANGERIE POUR CONVOYER DE LA PÂTE

(30) Priorität: 11.03.2015 DE 102015003051
(43) Veröffentlichungstag der Anmeldung: 14.09.2016
(73) Patentinhaber: Fritsch Bakery Technologies GmbH & Co. KG, 97348 Markt Einersheim (DE)
(72) Erfinder: Bernhardt, Udo, 97346 Iphofen (DE)
(74) Vertreter: Grünecker Patent- und Rechtsanwälte PartG mbB

(56) Entgegenhaltungen:
- AU-B2- 566 508
- US-A- 2 839 180
- US-A- 2 839 181
- US-A1- 2003 228 396
- US-A1- 2004 231 966

## Beschreibung

Die Erfindung betrifft eine Bäckereimaschinenanlage zum Fördern von Teig, umfassend eine Förderbandeinrichtung mit einem über einen Rollengang angetriebenen Förderband, dessen Längsseitenkanten bereichsweise zur Bildung eines gegenüber den Längsseitenkanten vertieften Mittelbereichs durch Stützmittel angehoben sind.

Bei Förderbändern aller Art, aber auch bei solchen in Bäckereimaschinen, ist es üblich, die Kanten eines Förderbandes gegenüber dem Mittelbereich etwas anzuheben, um ein Ablagern des zu fördernden Gutes über die Seitenkanten beim Transport entlang des Förderbandes zu vermeiden. Dies führt in der Regel dazu, dass auch der das zu fördernde Gut des hauptsächlich tragende Mittelbereich im Querschnitt eine mehr oder weniger starke Ausmuldung aufweist, was sich dann negativ auswirkt, wenn ein Förderband nicht nur als Fördermittel eines Gutes benutzt wird, sondern auch dazu dienen soll, darauf gefördertes Material in eine bestimmte Form z.B. mit rechteckigem Querschnitt zu bringen.

In Bäckereimaschinenanlagen werden deswegen als Stand der Technik auch völlig flach laufende Förderbänder verwendet, die bereichsweise von Seitenförderbändern flankiert sind, wobei die Seitenförderbänder mit ihrer gegen das zu fördernde Gut im Wesentlichen rechtwinkelig zur fördernden Fläche des Hauptförderbandes ausgerichtet sind. Dies führt zwar dazu, dass das zu fördernde Gut von sich synchron bewegenden Bandoberflächen "kastenförmig" eingefasst ist, was einer Formung zugutekommt. Allerding ist eine derartige Förderbandausbildung nach dem Stand der Technik für hoch fließfähige Teige nur begrenzt einsetzbar, weil zwischen den beidseitig angeordneten Seitenförderbändern und dem unten liegenden Bodenförderband ein Spalt vorhanden ist, in welchen ein fließfähiger Teig hineinlaufen kann. Zudem sein die vertikalen Steinbandoberflächen nur schwierig zu bemehlen. Außerdem besteht die Gefahr, dass am Ende eines Seitenförderbandes der Teig am Seitenförderband kleben bleibt und mit auf die Außenseite des Förderbandes herumgeschlungen wird, was zu Verschmutzungen und Teigverlust führt.

AU 566 508 B2 offenbart eine Anlage zum Fördern von Teig.

US 2003/228396 A1 offenbart ebenso eine Anlage zum Fördern von Teig.

Der Erfindung liegt die Aufgabe zugrunde, eine Bäckereimaschinenanlage mit den Merkmalen des Oberbegriffes des Anspruches 1 derart auszubilden, dass sie auch für fließfähige Teige problemlos einsetzbar ist und ohne Teigverlust und die Gefahr von Verschmutzung ein sicherer Transport des Teigs und eine gewünschte Formung des Teigs durchgeführt werden kann. Diese Aufgabe wird durch eine Anlage mit den Merkmalen des Anspruchs 1 gelöst, vorteilhafte Weiterbildungen ergeben sich aus den Unteransprüchen.

Als Kern der Erfindung wird es angesehen, das Förderband im Bereich seiner Längsseitenkanten wenigstens zweilagig auszubilden, wobei die seitlichen oberen Lagen flexibel und mit Abstand von den Längsseitenkanten über jeweils eine linienartige Verbindung an der oder einer unteren Lage angeordnet sind.

Eine derartige Förderbandausbildung mit hochklappbaren oberen Lagen ermöglicht es, ein "Bodenförderband" zu schaffen, dessen Mittelbereich völlig eben liegen bleibt, auch wenn die flexiblen oberen Lagen schräg oder rechtwinkelig durch Führungsmittel nach oben geklappt werden, um einen Teigformungsabschnitt in der Förderbandeinrichtung zur Verfügung zu stellen. Die seitlichen unteren Lagen, die unter den oberen Lagen liegen, sind vorzugsweise relativ steif mit dem Mittelbereich verbunden und sorgen dafür, dass der Mittelbereich sich nicht trogartig verwölbt, sodass der Boden der Förderbandeinrichtung über deren gesamte Länge mehr oder weniger eben ausgebildet ist. Die Flexibilität der seitlichen oberen Lagen kann so gewählt werden, dass sie zum einen sich leicht nach oben klappen lässt, was zum Beispiel durch Stützmittel geschehen kann, die zwischen den seitlichen oberen Lagen und den seitlichen unteren Lagen angeordnet sind. Die Stützmittel können so ausgebildet werden, dass sie einerseits die seitlichen oberen Lagen in dem gewünschten Längsbereich der Förderbandeinrichtung anheben, gleichzeitig aber auch die seitlichen unteren Lagen flach und gleichebig mit dem Mittelbereich halten, was dafür sorgt, dass der Mittelbereich besonders flach ausgebildet bleibt.

Die Verbindung zwischen dem Mittelbereich und dem seitlichen oberen Lagen ist filmscharnierartig ausgebildet, d. h. entweder geht das Material mit einem verdünnten Bereich vom Mittelbereich in die seitlichen oberen Lagen über oder es ist eine gesonderte Filmscharnierverbindung geschaffen, beispielsweise durch einen aufgeklebten oder vulkanisierten Längsstreifen, der eine besonders hohe Flexibilität aufweist. Diese dichte Ausbildung zwischen den hochgeklappten seitlichen oberen Lagen und dem Mittelbereich verhindert, dass Teig seitlich nach außen austritt, was einer Verschmutzung der Anlage entgegenwirkt.

Die Anlage kann besonders gut gereinigt, aber auch besonders gut mit einem Backtrennmittel oder Mehl versehen werden, wenn die Oberflächen der seitlichen oberen Lagen stufenlos und gleichebig in die Oberfläche des Mittelbereichs übergehen.

Vorzugsweise nimmt der Mittelbereich etwa die Hälfte der Gesamtbreite des Förderbandes ein, es liegt aber auch im Rahmen der Erfindung, den Mittelbereich breiter oder schmaler zu gestalten, je nachdem, welche Form aus dem Teig zu bildende Formling nach Durchlaufen der Förderbandformstrecke aufweisen soll. Das Förderband kann bei angehobenen seitlichen oberen Lagen einen trapezartigen oder rechteckigen Querschnitt einnehmen. Wird zum Beispiel eine Teigformung mit senkrechten Seitenbereichen angestrebt, dann wird durch die Stützelemente eine rechtwinkelige Anhebung der oberen seitlichen Lagen vorzunehmen sein.

Wie bereits erwähnt, ist es erstrebenswert, wenn die unter den angehobenen seitlichen oberen Lagen angeordneten seitlichen unteren Lagen möglichst flach geführt werden. Dies kann entweder durch den unteren Bereich der Stützmittel erfolgen, die die oberen Lagen anheben, genauso gut ist es aber auch möglich, gesonderte Niederhaltermittel z. B. niederhaltende Rollen oder niederhaltende Gleitführungen vorzusehen, die die seitlichen unteren Lagen des Förderbandes flach auf einer Unterlage z. B. einem Rollengang halten.

Die seitlichen oberen Lagen sind nicht nur hinsichtlich ihrer Hochbiegbarkeit elastisch ausgebildet, vorteilhaft ist es zudem, wenn sie eine gewisse Längselastizität aufweisen, da dann das Hochführen der seitlichen oberen Lagen in eine angehobene oder gar senkrechte Lage besonders leicht zu vollziehen ist. Die seitlichen oberen Lagen und der Mittelbereich können aus dem gleichen Material ausgebildet sein. Vorzugsweise wird ein Kunststoffmaterial in Bäckereimaschinenanlagen eingesetzt. Die seitlichen unteren Lagen und der Mittelbereich können aber auch eine Stufe bilden, die von der Materialstärke der seitlichen oberen Lagen ausgefüllt wird, was dann wiederum in einer Gleichebigkeit aller Oberflächen des Förderbandes, d. h. der Oberflächen der seitlichen oberen Lagen und des Mittelbereichs resultiert. Die Elastizität der seitlichen oberen Lagen ist größer bemessen sein als die Elastizität des Mittelbereichs und/oder der seitlichen unteren Lagen, weil dann ein flaches Liegenbleiben des Mittelbereichs bei hochgeklappten seitlichen oberen Lagen gewährleistet ist.

In der Bäckereimaschinenanlage ist vorteilhafter Weise wenigstens eine Vorrichtung zum Aufbringen von Mehl oder eine Vorrichtung zum Aufbringen eines Backtrennmittels auf die Oberflächen der seitlichen oberen Lagen und des Mittelbereichs vorgesehen. Im Förderbereich der angehobenen seitlichen oberen Lagen kann außerdem eine Walze oder ein Walzengang angeordnet werden, der die auf dem Förderband angeordnete Teigmasse beaufschlagt.

Im Eingangsbereich des Förderband-Formabschnitts mit hochgeklappten seitlichen oberen Lagen kann eine Portioniereinrichtung vorgesehen werden, die geeignet und ausgebildet ist, einzelne Teigportionen auf dem Förderband abzusetzen, die dann im hochgeklappten Seitenwandbereich seitlich begrenzt und geformt werden, sodass aus dem Formungsabschnitt der Förderbandeinrichtung ein definiertes Teigvolumen herausläuft. Dabei ist es unbeachtlich, wenn fließfähiger Teig sich nach dem Herauslaufen aus dem Förderbandformabschnitt seitlich etwas ausbreitet, wesentlich ist insbesondere ein konstantes Volumen von Teig, das aus dem Förderbandformabschnitt herauskommt.

Weiterhin kann vorgesehen werden, dass insbesondere vor der oberen Rollenbeaufschlagung des Teigs in dem Förderbandformabschnitt auch die Oberfläche des Teigs bemehlt oder mit Backtrennmittel versehen wird, um ein Verkleben der formenden Elemente von oben zu vermeiden.

Die Erfindung ist anhand von Ausführungsbeispielen in den Zeichnungsfiguren näher erläutert. Diese zeigen:
- Fig. 1: eine Förderbandeinrichtung einer Bäckereimaschinenanlage mit einem Förderband mit hochgezogenen Seitenkanten (Stand der Technik);
- Fig. 2: eine Schnittdarstellung gemäß Fig. 1;
- Fig. 3: eine Förderbandanlage mit vertikal verlaufenden Seitenförderbändern (Stand der Technik);
- Fig. 4: eine schematische Schnittdarstellung durch die Anlage gemäß Fig. 3;

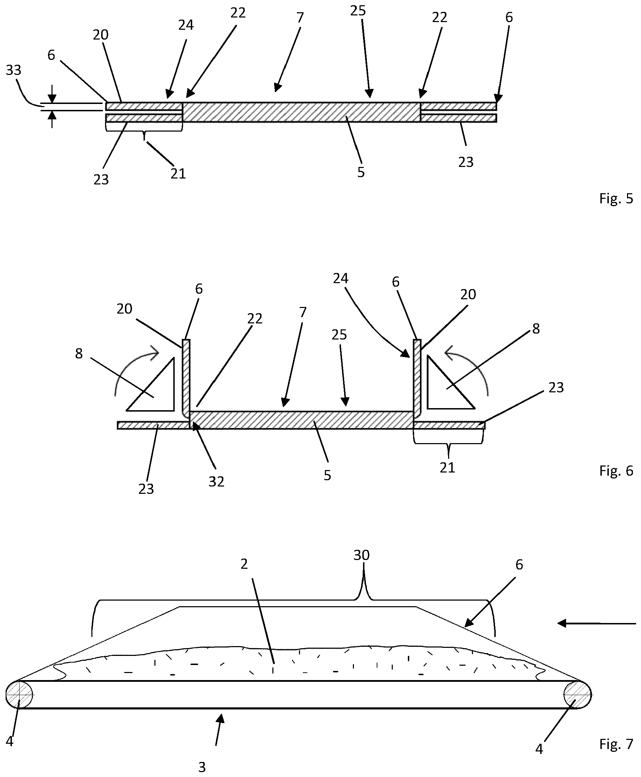

- Fig. 5: eine Schnittdarstellung durch ein Förderband gemäß der Erfindung mit flach ausgerichteten seitlichen oberen Lagen;
- Fig. 6: eine Schnittdarstellung durch das erfindungsgemäße Förderband gemäß Fig. 5 mit hochgestellten seitlichen oberen Lagen;
- Fig. 7: eine Seitenansicht der Förderbandeinrichtung nach der Erfindung;
- Fig. 8: eine Schnittdarstellung gemäß Fig. 7;
- Fig. 9: einen schematischen Längsschnitt einer Bäckereimaschinenanlage mit der erfindungsgemäßen Förderbandeinrichtung, mit Walzenportionierer und Vorrichtungen zum Aufbringen von Mehl auf die Förderbänder und die Oberfläche des Teigs;
- Fig. 10: eine Draufsicht auf die Anlage gemäß Fig. 9 eine Ausführungsform mit einem modifizierten Portionierer;
- Fig. 11: einen schematischen Längsschnitt einer Bäckereimaschinenanlage entsprechend Fig. 9, allerdings mit einem Sternwalzenportionierer gemäß Fig. 11a.

Die in den Zeichnungsfiguren 9, 10 und 11 dargestellte Bäckereimaschinenanlage 1 zum Fördern von Teig 2 umfasst eine Förderbandeinrichtung 3 mit einem über einem Rollengang 4 angetriebenen Förderband 5, dessen Längsseitenkanten 6 zur Bildung eines gegenüber den Längsseitenkanten 6 vertieften Mittelbereich 7 durch Stützmittel 8 angehoben sind.

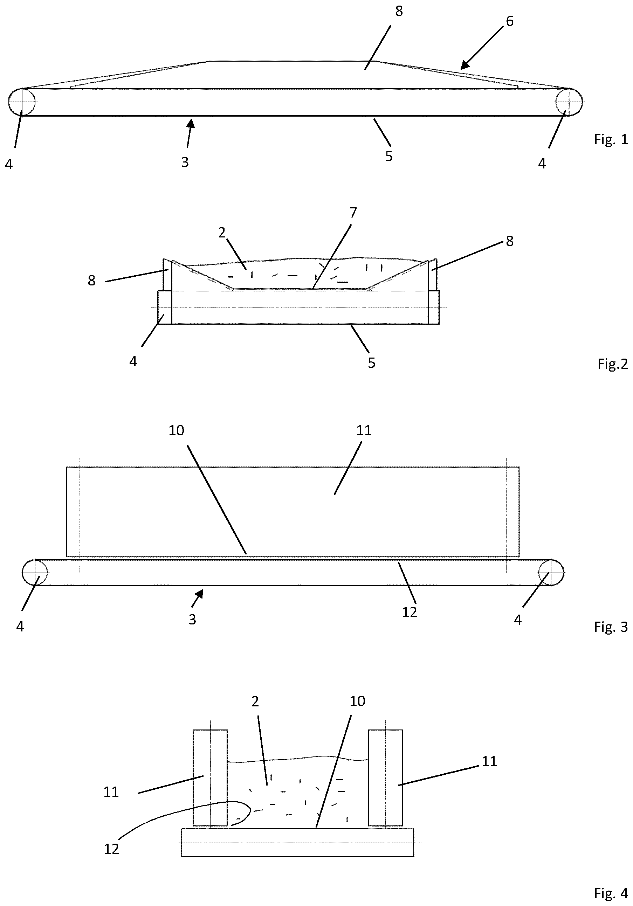

Eine derartige Vorrichtung nach dem Stand der Technik ist in den Figuren 1 und 2 dargestellt, die Stützmittel 8 können schräggestellte Rollen oder Aufgleitelemente sein, die die Längsseitenkanten 6 des Förderbandes 5 anheben, so wie dies insbesondere in der Schnittdarstellung gemäß Figur 2 deutlich zu sehen ist.

Als weiterer Stand der Technik ist es bekannt, ein Bodenförderband 10 völlig flach laufen zu lassen und im Bereich der Längsseitenkanten vertikal umlaufende Seitenförderbänder 11 anzubringen, wie dies insbesondere aus der Schnittdarstellung gemäß Fig. 4 deutlich hervorgeht. Negativ dabei ist ein Spalt 12, der bei dieser alternativen Ausführungsform einer Förderbandeinrichtung für Bäckereimaschinen vorhanden ist.

In den Zeichnungsfiguren 5 ff ist eine erfindungsgemäße Einrichtung einer Förderbandeinrichtung 3 dargestellt, wie sie in Bäckereimaschinenanlagen 1 besonders vorteilhaft verwendet werden kann. In Zeichnungsfigur 5 ist ersichtlich, dass das Förderband 5 im Bereich seiner Längsseitenkanten 6 wenigstens zweilagig ausgebildet ist, wobei die seitlichen oberen Lagen 20 flexibel und mit Abstand 21 von den Längsseitenkanten 6 über jeweils eine linienartige Verbindung 22 an einer unteren Lage 23 oder dem Mittelbereich 7 angeordnet sind. Die Verbindungen 22 sollen linienartig sein, was eine besonders dichte Verbindung zwischen den seitlichen oberen Lagen 20 und dem Mittelbereich 7 sicherstellt. Es liegt aber auch im Rahmen der Erfindung, aneinandergereihte punktartige oder sonstige Verbindungen vorzusehen und ein geeignetes Abdeckmittel vorzusehen, das geeignet ist, spaltartige Zwischenabschnitte zwischen den Verbindungen abzudecken.

Erfindungsgemäß ist eine linienartige Verbindung oder sind Verbindungsabschnitte zwischen dem Mittelbereich 7 und den seitlichen oberen Lagen 20 filmscharnierartig ausgebildet, insbesondere gehen die seitlichen oberen Lagen 20 einstückig in das Material des Mittelbereichs 7 über.

Die Stützmittel 8 sind im angehobenen Bereich 30 der seitlichen oberen Lagen 20 zwischen den seitlichen oberen Lagen 20 und den seitlichen unteren Lagen 23 angeordnet und damit im Prinzip geeignet, sowohl die seitlichen oberen Lagen 20 nach oben abzustützen und die seitlichen unteren Lagen 23 nach unten zu halten.

Die Oberflächen 24 der seitlichen oberen Lagen 20 gehen mit Vorteil stufenlos und insbesondere gleichebig in die Oberfläche 25 des Mittelbereichs 7 über.

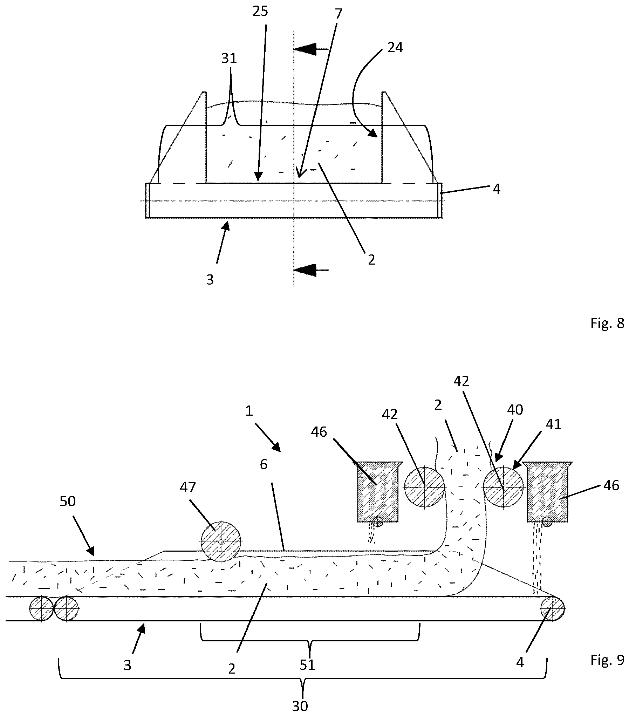

Der Mittelbereich 7 nimmt etwa die Hälfte der Gesamtbreite 31 des Förderbandes 5 ein. Die Oberfläche 24 und 25 des Förderbandes 5 schließen bei angehobenen seitlichen oberen Lagen 20 einen trapezartigen oder - wie in Fig. 8 deutlich zu sehen - rechteckigen Querschnitt ein. Die Oberfläche 25 des Mittelbereichs 7 des Förderbandes 5 ist bei angehobenen seitlichen oberen Lagen 20 im Querschnitt weitgehend eben.

Die seitlichen oberen Lagen 20 sollten darüber hinaus längselastisch ausgebildet sein, da der Kantenbereich beim Hochklappen etwas gedehnt werden muss. Grundsätzlich ist es möglich, dass die seitlichen oberen Lagen 20 und der Mittelbereich 7 aus dem gleichen Material, insbesondere Kunststoffmaterial ausgebildet sind. Die seitlichen unteren Lagen 23 und der Mittelbereich 7 können eine Stufe 32 bilden, die von der Materialstärke 33 der seitlichen oberen Lagen 20 so ausgefüllt wird, dass bei heruntergeklappten seitlichen oberen Lagen 20 der Mittelbereich 7 und die Oberflächen 24 der seitlichen oberen Lagen 20 eben sind.

Grundsätzlich wäre es denkbar, die Außenkanten der seitlichen oberen Lagen 20 im seitlich angehobenen Bereich 30 durch sie übergreifende Führungselemente zu führen.

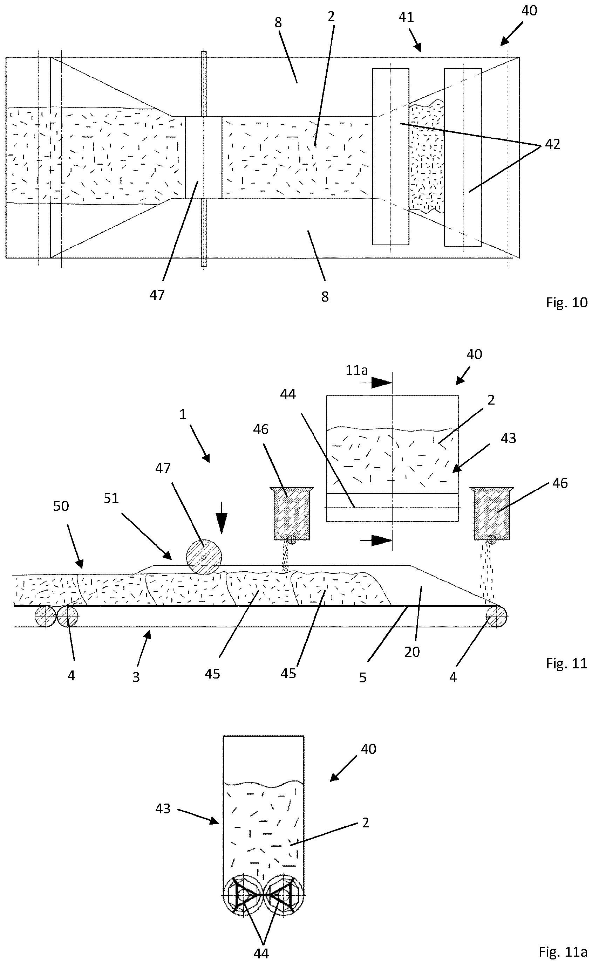

Die Bäckereimaschinenanlage 1 gemäß Fig. 9-11 zeigt deutlich die Förderbandeinrichtung 3 und eine über der Förderbandeinrichtung 3 angeordnete Portioniereinrichtung 40, die beim Ausführungsbeispiel gemäß Fig. 9 als Walzenportionierer 41 mit zwei parallelen Walzen 42 ausgebildet ist, in Fig. 11 ist ein Sternwalzenportionierer 43 dargestellt, der mit seinen Sternwalzen 44 einzelne Teigportionen 45 abklemmt und nachfolgend auf dem Förderband 5 der Förderbandeinrichtung 3 absetzt. In den Zeichnungsfiguren 9 und 11 sind weiterhin Mehler 46 dargestellt, die geeignet sind, die Oberflächen des Förderbandes 5 und die Oberfläche eines sich ausbildenden Teigbandes zu bemehlen. Im Förderbandbereich der angehobenen seitlichen oberen Lagen 20 ist ferner ein oberer Walzengang 47 dargestellt, der den auf dem Förderband angeordneten Teig 2 von oben beaufschlagt, um eine Formung des Teigs 2 mit weitgehend rechteckigem Querschnitt und definiertem Volumen im Ausgangsbereich 50 des Förderbandformabschnitts 51 sicherzustellen.

**BEZUGSZEICHENLISTE**

| | | | |
|---|---|---|---|
| 1 | Bäckereimaschinenanlage | 25 | Oberfläche v. 7 |
| 2 | Teig | | |
| 3 | Förderbandeinrichtung | 30 | angehobener Bereich |
| 4 | Rollengang | 31 | Gesamtbreite |
| 5 | Förderband | 32 | Stufe |
| 6 | Längsseitenkanten | 33 | Materialstärke |
| 7 | Mittelbereich | | |
| 8 | Stützmittel | 40 41 | Portioniereinrichtung Walzenportionierer |
| 10 | Bodenförderband | 42 | Walzen v. 41 |
| 11 | Seitenförderband | 43 | Sternwalzenportionierer |
| 12 | Spalt | 44 45 | Sternwalzen Teigportion |
| 20 | seitliche obere Lagen | 46 | Mehler |
| 21 | Abstand | 47 | oberer Walzengang |
| 22 | Verbindung | | |
| 23 | seitliche untere Lagen | 50 | Ausgangsbereich |
| 24 | Oberfläche v. 20 | 51 | Förderbandformabschnitt |

## Patentansprüche

1. Bäckereimaschinenanlage (1) zum Fördern von Teig (2), umfassend eine Förderbandeinrichtung (3) mit einem über einem Rollengang (4) angetriebenen Förderband (5), dessen Längsseitenkanten (6) bereichsweise zur Bildung eines gegenüber den Längsseitenkanten (6) vertieften Mittelbereich (7) durch Stützmittel (8) angehoben sind, wobei das Förderband (5) im Bereich seiner Längsseitenkanten (6) wenigstens zweilagig ausgebildet ist, wobei die seitlichen oberen Lagen (20) flexibel und mit Abstand (21) von den Längsseitenkanten (6) über jeweils eine linienartige Verbindung (22) an der oder einer unteren Lage (23) oder dem Mittelbereich (7) angeordnet sind, wobei die seitlichen oberen Lagen (20) einstückig in das Material des Mittelbereiches (7) übergehen, wobei der Mittelbereich (7) des Förderbandes (5) bei angehobenen seitlichen oberen Lagen (20) im Querschnitt weitgehend eben ist, **dadurch gekennzeichnet, dass** die linienartigen Verbindungen zwischen dem Mittelbereich (7) und den seitlichen oberen Lagen (20) filmscharnierartig ausgebildet sind, wobei die Elastizität der seitlichen oberen Lagen (20) größer ist als die Elastizität des Mittelbereiches (7) und/oder der seitlichen unteren Lagen (23).

2. Anlage nach Anspruch 1, **dadurch gekennzeichnet, dass** die Stützmittel (8) im angehobenen Bereich (30) der seitlichen oberen Lagen (20) zwischen den seitlichen oberen Lagen (20) und den seitlichen unteren Lagen (23) angeordnet sind.

3. Anlage nach einem der vorhergehenden Ansprüche, **dadurch gekennzeichnet, dass** die Oberflächen (24) der seitlichen oberen Lagen (20) stufenlos und insbesondere gleichebig in die Oberfläche (25) des Mittelbereiches (7) übergehen.

4. Anlage nach einem der vorhergehenden Ansprüche, **dadurch gekennzeichnet, dass** der Mittelbereich (7) etwa die Hälfte der Gesamtbreite (31) des Förderbandes (5) einnimmt.

5. Anlage nach einem der vorhergehenden Ansprüche, **dadurch gekennzeichnet, dass** das Förderband (5) bei angehobenen seitlichen oberen Lagen (20) einen trapezartigen oder rechteckigen Querschnitt aufweist.

6. Anlage nach einem der vorhergehenden Ansprüche, **dadurch gekennzeichnet, dass** die unter den angehobenen seitlichen oberen Lagen (20) angeordneten seitlichen unteren Lagen (23) von oben zumindest abschnittsweise niederhaltend beaufschlagt sind.

7. Anlage nach einem der vorhergehenden Ansprüche, **dadurch gekennzeichnet, dass** als Stützmittel (8) wenigstens ein die seitlichen oberen Lagen (20) anhebender Rollengang angeordnet ist.

8. Anlage nach einem der vorhergehenden Ansprüche, **dadurch gekennzeichnet, dass** die seitlichen oberen Lagen (20) im Bereich der linienartigen Verbindungen (22) in die Stufe (32) zwischen den seitlichen unteren Lagen (23) und dem Mittelbereich (7) übergehen.

9. Anlage nach einem der vorhergehenden Ansprüche, **dadurch gekennzeichnet, dass** die seitlichen oberen Lagen (20) in den Mittelbereich (7) spaltfrei übergehen.

10. Anlage nach einem der vorhergehenden Ansprüche, **dadurch gekennzeichnet, dass** die Außenkanten der seitlichen oberen Lagen (20) im seitlich angehobenen Förderbandbereich durch die Außenkanten bereichsweise übergreifende Führungselemente geführt sind.

11. Anlage nach einem der vorhergehenden Ansprüche, **dadurch gekennzeichnet, dass** im Förderbandbereich der angehobenen seitlichen oberen Lagen (20) ein oberer Walzengang (47) angeordnet ist, der auf dem Förderband (5) angeordneten Teig (2) von oben beaufschlagt.

## Claims

1. A bakery machine installation (1) for conveying dough (2), comprising a conveyor belt device (3) with a conveyor belt (5) driven over a roller conveyor (4), the longitudinal side edges (6) of which conveyor belt are raised by supporting means (8) in some regions to form a central region (7) which is recessed relative to the longitudinal side edges (6), wherein the conveyor belt (5) is constructed in at least two layers in the region of its longitudinal side edges (6), wherein the lateral upper layers (20) are arranged flexibly and at a distance (21) from the longitudinal side edges (6) via a respective line-like connection (22) on the or a lower layer (23) or the central region (7), F wherein the lateral upper layers (20) merge integrally into the material of the central region (7), wherein the central region (7) of the conveyor belt (5) is substantially flat in cross-section when the lateral upper layers (20) are raised,
**characterised in that**
the line-like connections between the central region (7) and the lateral upper layers (20) are formed like film hinges,
wherein the elasticity of the lateral upper layers (20) is greater than the elasticity of the central region (7) and/or the lateral lower layers (23).

2. The installation according to claim 1, **characterised in that** the support means (8) are arranged in the raised region (30) of the lateral upper layers (20) between the lateral upper layers (20) and the lateral lower layers (23).

3. The installation according to one of the preceding claims, **characterised in that** the surfaces (24) of the lateral upper layers (20) merge continuously and in particular at the same level into the surface (25) of the central region (7).

4. The installation according to one of the preceding claims, **characterised in that** the central area (7) occupies approximately half of the total width (31) of the conveyor belt (5).

5. The installation according to one of the preceding claims, **characterised in that** the conveyor belt (5) has a trapezoidal or rectangular cross-section when the lateral upper layers (20) are raised.

6. The installation according to one of the preceding claims, **characterised in that** the lateral lower layers (23) arranged under the raised lateral upper layers (20) are acted upon from above in a holding down manner at least in sections.

7. The installation according to one of the preceding claims, **characterised in that** at least one roller conveyor raising the lateral upper layers (20) is arranged as a support means (8).

8. The installation according to one of the preceding claims, **characterised in that** the lateral upper layers (20) in the region of the line-like connections (22) merge into the step (32) between the lateral lower layers (23) and the central region (7).

9. The installation according to one of the preceding claims, **characterised in that** the lateral upper layers (20) merge into the central region (7) without a gap.

10. The installation according to one of the preceding claims, **characterised in that** the outer edges of the lateral upper layers (20) are located in the conveyor belt area laterally raised are guided by the outer edges of guide elements which overlap in some areas.

11. The installation according to one of the preceding claims, **characterised in that** in the conveyor belt area of the raised lateral upper layers (20) an upper roller train (47) is arranged, which acts upon dough (2) arranged on the conveyor belt (5) from above.

## Revendications

1. Installation de machine de boulangerie (1) pour convoyer la pâte (2), comprenant un dispositif convoyeur (3) avec une bande de transport (5) entraînée par un convoyeur à rouleaux (4), dont les bords latéraux longitudinaux (6) sont relevés par endroits par des moyens de support (8) pour former une zone centrale (7) en retrait par rapport aux bords latéraux longitudinaux (6), **caractérisée en ce que** la bande de transport (5) est réalisée en au moins deux couches dans la zone de ses bords latéraux longitudinaux (6), les couches supérieures latérales (20) étant disposées de manière flexible et à une distance (21) des bords latéraux longitudinaux (6) par l'intermédiaire d'une liaison linéaire (22) sur la couche inférieure (23) ou sur la zone centrale (7), F les couches supérieures latérales (20) se fondant intégralement dans le matériau de la zone centrale (7), la zone centrale (7) de la bande de transport (5) étant sensiblement plane en section transversale lorsque les couches supérieures latérales (20) sont soulevées, **caractérisée en ce que**
les connexions linéaires entre la région centrale (7) et les couches supérieures latérales (20) sont formées comme des charnières de film,
dans laquelle l'élasticité des couches latérales supérieures (20) est supérieure à l'élasticité de la région centrale (7) et/ou des couches latérales inférieures (23).

2. Installation selon la revendication 1, **caractérisée en ce que** les moyens de support (8) sont disposés dans la zone surélevée (30) des couches supérieures latérales (20) entre les couches supérieures latérales (20) et les couches inférieures latérales (23).

3. Installation selon l'une des revendications précédentes, **caractérisée en ce que** les surfaces (24) des couches supérieures latérales (20) se fondent de manière continue et en particulier au même niveau dans la surface (25) de la région centrale (7).

4. Installation selon l'une des revendications précédentes, **caractérisée en ce que** la zone centrale (7) occupe environ la moitié de la largeur totale (31) de la bande de transport (5).

5. Installation selon l'une des revendications précédentes, **caractérisée en ce que** la bande de transport (5) présente une section transversale trapézoïdale ou rectangulaire lorsque les couches supérieures latérales (20) sont soulevées.

6. Installation selon l'une des revendications précédentes, **caractérisée en ce que** les couches inférieures latérales (23) disposées sous les couches supérieures latérales (20) surélevées sont sollicitées par le haut de manière à maintenir la pression au moins par sections.

7. Installation selon l'une des revendications précédentes, **caractérisée en ce qu'au** moins un convoyeur à rouleaux soulevant les couches supérieures latérales (20) est disposé comme moyen de support (8).

8. Installation selon l'une des revendications précédentes, **caractérisée en ce que** les couches supérieures latérales (20) dans la zone des liaisons linéaires (22) se fondent dans le gradin (32) entre les couches inférieures latérales (23) et la zone centrale (7).

9. Installation selon l'une des revendications précédentes, **caractérisée en ce que** les couches supérieures latérales (20) se fondent dans la région centrale (7) sans discontinuité.

10. Installation selon l'une des revendications précédentes, **caractérisée en ce que** les bords extérieurs des couches supérieures latérales (20) sont situés dans la zone de la bande de transport; les couches supérieures latérales sont guidées par les bords extérieurs des éléments de guidage qui se chevauchent dans certaines zones.

11. Installation selon l'une des revendications précédentes, **caractérisée en ce que** dans la zone de la bande de transport des couches supérieures latérales surélevées (20) est disposé un train de rouleaux supérieur (47), qui agit sur la pâte (2) disposée sur la bande de transport (5) par le haut.
